# EUROPEAN PATENT APPLICATION

(11) **EP 1 726 517 A1**
(43) Date of publication of application: **29.11.2006**
(21) Application number: 05425376.0
(22) Date of filing: 27.05.2005
(51) Int. Cl.: B62M 3/00

(54) **Asymmetrical coupling profile between a central axle of a bottom bracket of a bicycle transmission and a pedal crank**

(71) Applicant: Campagnolo Srl, 36100 Vicenza (VI) (IT)
(72) Inventor: Dal Pra, Giuseppe, 36010 Zané (Vicenza) (IT); Dettori, Paolo, 36100 Vicenza (VI) (IT)
(74) Representative: Checcacci, Giorgio

(57) **Abstract**

The coupling profile (30; 30') comprises, in a plane transversal to the axis (X) of the bottom bracket, outer arcs (CD; CD') belonging to the same outer circumference (31) of the coupling, each of such outer arcs (CD; CD') being flanked and filleted on one side to a power transmission line (AC) and on the opposite side to an idle line (DA; D'A). The power transmission line (AC) and the idle line (DA; D'A) are asymmetrical to each other with respect to the outer arc (CD; CD') that separates them.

## Description

The present invention regards the coupling between a central axle of a bottom bracket of a bicycle transmission and a pedal crank, and specifically concerns a coupling profile, as well as a central axle and a pedal crank shaped according to such a profile.

In relation to a central axle and to a pedal crank of a bicycle transmission, by "coupling" the mutual mechanical interaction is meant between axle and pedal crank that makes the two elements integral in rotation about the axis of the bottom bracket, allowing the torque or rather power transmission between the pedal crank and the axle. In the same context, by "attachment", on the other hand, the mutual mechanical interaction is indicated that makes the two elements integral in translation in the direction of the axis of the bottom bracket, preventing the pedal crank from slipping off, thus ending the coupling.

The coupling between the ends of the central axle and a pedal crank (right or left) of the bicycle is obtained, according to the prior art, through insertion of the aforementioned ends, projecting outside of the frame, in suitable receiving seats made at the ends of the elongated body of which each of the two pedal cranks of the bicycle consist. Suitable means make the central axle and each of the pedal cranks integral in rotation; an attachment screw then ensures that the coupling between the axle and the pedal crank is maintained.

In the present patent text by "coupling profile" the ideal outline is meant that separates the body of the central axle from the body of a pedal crank coupled with it. Normally, such a line defines both the outer profile of the axle, and the inner profile of the receiving seat in the pedal crank, apart from the working tolerances; it is nevertheless possible for the aforementioned outer profile of the axle and inner profile of the seat to slightly depart from such an ideal outline, leaving small empty spaces between axle and seat.

The axle-pedal crank coupling must ensure high mechanical strength since during pedalling it is subjected to high and discontinuous stresses, in traction, in bending and in twisting. For such a purpose, known axle-pedal crank couplings provide for coupling profiles with particular geometric shapes (polygonal or with grooved profiles), so as to make shape couplings such as to make the pedal cranks integral in rotation with the central axle.

In such profiles, two or possibly three types of lines are defined that follow each other sequentially:
- a power transmission line, which is the line through which the pressing contact between the material of the pedal crank that pushes the material of the axle during pedalling forwards takes place;
- an idle line, which is the line through which during pedalling forwards there is contact but not pressing contact, thus without power transmission, since the material of the pedal crank is in front of the material of the axle in the direction of rotation; through this idle line there would be power transmission if backward pedalling were absurdly foreseen, but stresses are in any case also transmitted during certain travel conditions, typically when the cyclist is standing up on the pedals and does not pedal (his weight, possibly accentuated by holes or irregularities in the road, weighs down not only on the pedal facing forwards but also on the pedal facing backwards, thus causing a counterthrust on the pedal crank);
- possibly, finally, a peripheral line that is formed from an outer arc of circumference of the coupling, or rather of the outer circumference of the axle, and that therefore cannot transmit power neither in one direction nor in the other, since it develops in the same direction as the rotation movement.

Therefore, the coupling profile is formed from a succession along all 360° about the axis of the axle - in the direction of rotation during pedalling forwards - of triads each formed from a power transmission line, a peripheral line or outer arc of circumference and from an idle line. On the axle and in the receiving seat in the pedal crank this succession determines a corresponding succession of ribs and grooves, extending axially; on the axle, each rib is defined by a power transmission line, an outer arc and an idle line, whereas conversely every groove is defined by an idle line and by a power transmission line; in the seat of the pedal crank, vice-versa, each rib is defined by an idle line and by a power transmission line, whereas conversely every groove is defined by a power transmission line, an outer arc and an idle line.

A known type of axle-pedal crank coupling is that known as ISIS standard (see "ISIS Drive - The International Spline Interface Standard, ISIS Drive Standard Committee, 2001), which foresees a grooved coupling profile with a defined shape and precise size values for ribs and grooves.

In particular, according to such a standard, the axle has ten equally angularly spaced ribs on its outer surface that extend longitudinally along the axis of the axle, such ribs consisting of crest zones joined by as many depressions having, in section, a circular profile. The fitting between each crest and the adjacent depression consists of a corner of about 60°, by this meaning that at the fitting point the straight line tangent to the circular depression and the straight line tangent to the crest form an angle of about 60°.

Correspondingly, the pedal crank has a receiving seat with a profile having a shape substantially matching that of the outer profile of the axle and therefore has ten equally angularly spaced grooves that extend longitudinally along the axis of the hole; such grooves consist of corresponding bottom zones joined by as many protrusions projecting towards the axis of the hole, such protrusions having a substantially circular profile in section. The fitting between each bottom and the adjacent protrusion consists of a corner of about 60°.

A problem associated with this type of coupling is clearly that of mechanical strength, and such a problem is particularly serious since every bicycle always requires that the weight of each component is limited.

The present invention in particular tackles this problem by trying to make a axle-pedal crank coupling in which the mechanical stresses are distributed in a more homogeneous way, with respect to known solutions.

In its most general terms, therefore, the present invention concerns, in a first aspect thereof, a coupling profile according to what is defined by claim 1, and in further aspects thereof, a pedal crank and a axle according to what is defined by claims 19 and 23. Preferred characteristics are indicated in the dependent claims.

In particular, in its first aspect the invention concerns a coupling profile between a central axle of a bottom bracket of a bicycle transmission and a pedal crank, comprising, in a plane transversal to the axis of the bottom bracket, outer arcs belonging to the same outer circumference of the coupling, each of such outer arcs being flanked and filleted on one side to a power transmission line and on the opposite side to an idle line, characterised in that the power transmission line and the idle line are asymmetrical with respect to the outer arc that separates them.

Such an asymmetrical configuration allows a more efficient distribution of the stresses transmitted between pedal crank and axle, since it allows that the stresses transmitted in the direction of pedalling forwards are normally greater than those transmitted in the opposite direction to be taken into account.

Preferably, the power transmission line is filleted to the outer arc according to an angle of less than 45°, more preferably less than 20° and even more preferably equal to 0° (tangent fitting). Small angles in this position avoid stress concentration points and consequently structural weakness points on the bottom of the grooves in the seat of the pedal crank.

Preferably, the power transmission line comprises portions of line all filleted each other tangentially. The tangent fitting where the curvature changes is such as to minimise the concentration of stresses.

The power transmission line and the idle line can have a variously defined curved progression.

For the sake of simplicity of construction, the power transmission line comprises a first arc of circumference adjacent to the outer arc, concave towards the axis of the bottom bracket, and a second arc of circumference adjacent to the first arc of circumference, convex towards the axis of the bottom bracket.

Preferably, the first arc of circumference and the second arc of circumference of the power transmission line are filleted tangentially according to a straight line that forms an angle of less than 45° with the radial direction. An angle of this size ensures that the power transmission line is orientated so as to optimally transmit the power from the pedal crank to the central axle.

Again for the sake of simplicity of construction, but also to ensure uniformity in the distribution of stresses, the first concave arc and the second convex arc of the idle line and of the power transmission line have the same radius.

Preferably, in a first variant of the invention, the idle line comprises a radial rectilinear portion, filleted at 90° to the outer arc, and an arc of circumference that is convex towards the axis of the bottom bracket; more preferably, the rectilinear portion and the convex arc are filleted each other tangentially. This configuration allows both stress concentration zones to be avoided, and the angular extension of the idle line to be reduced, thus leaving a greater angular extension available for the outer arc and/or for the power transmission line.

In a second variant of the invention, the idle line comprises an arc of circumference that is concave towards the axis of the bottom bracket and an arc of circumference that is convex towards the axis of the bottom bracket; more preferably, the concave arc of circumference and the convex arc of circumference are filleted tangentially, and even more preferably the first portion of the idle line is filleted to the outer arc according to an angle of less than 30°. In such a way a more rounded shape is obtained, which - whilst having no influence upon the distribution of the stresses ― makes it easier to make the coupling profile, above all in the pedal crank, and is less dangerous to handle during assembly and/or maintenance of the pedal cranks.

Preferably, above all for the sake of simplicity of construction but also for the maximum uniformity in the distribution of the stresses, the convex arc of the idle line and the second convex arc of the adjacent power transmission line are extensions of each other.

In a particularly preferred embodiment, the profile comprises twenty triads each comprising a power transmission line, an outer arc and an idle line, in which the outer arc has an angular extension about the axis of the bottom bracket equal to about 7°, the idle line has an angular extension of about 4° and the power transmission line has an angular extension of about 7°.

In another particularly preferred embodiment, the profile comprises twenty triads each comprising a power transmission line, an outer arc and an idle line, in which the outer arc has an angular extension about the axis of the bottom bracket equal to about 6.5°, the idle line has an angular extension of about 4.5° and the power transmission line has an angular extension of about 7°.

In its second aspect, the invention concerns a central axle of a bottom bracket of a bicycle transmission, comprising two coupling zones for pedal cranks close to each of its two ends, such zones being externally shaped according to a coupling profile in accordance with the first aspect of the invention.

For the screwing engagement with an attachment element of the pedal crank, the axle can be hollow and comprise an internal threading at at least one or both of its ends, or else, on the other hand, it can comprise, at at least one or both of its two ends and adjacent to the respective coupling zone for the pedal crank, a shank provided with an external threading for screwing engagement with an attachment element of the pedal crank. In the first case, the attachment element shall have a substantially screw-type configuration, whereas in the second case it shall have a substantially ring nut-type configuration.

Preferably, the axle is made from steel.

In the third aspect thereof, the invention concerns a pedal crank of a bicycle transmission, comprising a receiving seat for a central axle of a bottom bracket, characterised in that such a seat is shaped according to a coupling profile in accordance with the first aspect of the invention.

Preferably, at least the zone of the pedal crank in which the receiving seat is formed is made from aluminium alloy. The rest of the pedal crank can be either made from the same material, or be made from composite materials, such as carbon fibre and the like.

Further characteristics and advantages of the invention shall become clearer from the following description of preferred embodiments thereof, made with reference to the attached drawings. In such drawings:
- figure 1 is an exploded axonometric view of a first pedal crank - central axle pair according to the invention;
- figure 2 is an exploded axonometric view of a second pedal crank - central axle pair according to the invention;
- figure 3 is a partial view of a coupling profile according to the invention.
- figure 4 is an overall view of the coupling profile of figure 3;
- la figure 5 is a view, analogous to figure 3, of a variant embodiment of the invention.

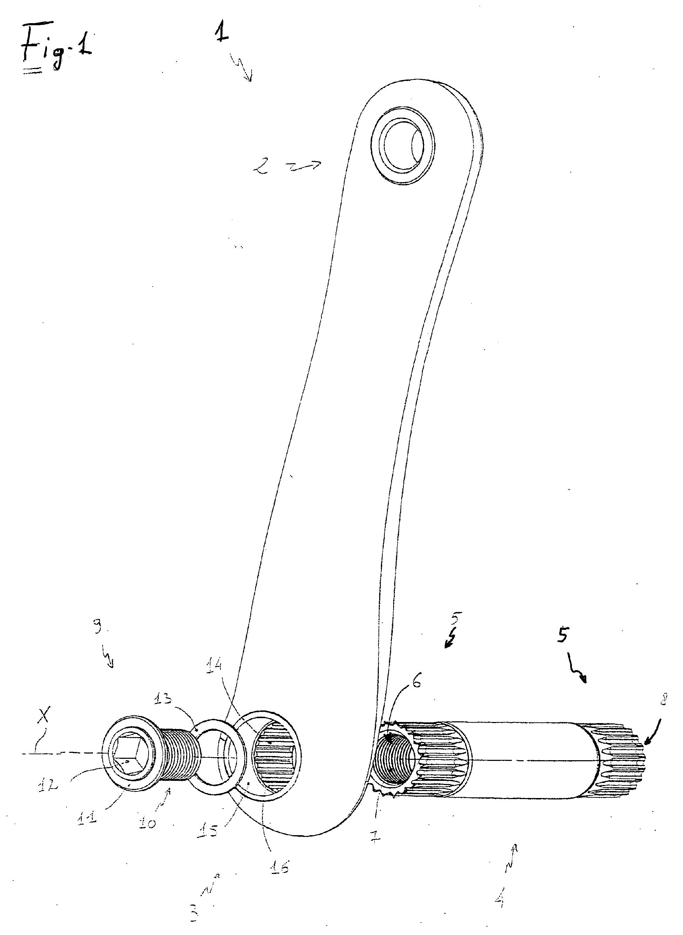

Figure 1 represents a left pedal crank 1 comprising an elongated body having, at one end, a hole 2 for the attachment of the pedal (not shown) and, at the other end, a receiving seat 3 for a central axle 4. The central axle 4 belongs to the bottom bracket of a bicycle transmission, which is in turn mounted in a suitable hole formed in the bicycle frame; only the axis X of the bottom bracket is shown in figure 1.

If the pedal crank 1 is made entirely of metal, the seat 3 is formed directly in the material that constitutes the pedal crank 1 itself. In a variant embodiment, the pedal crank 1 can be made from composite materials (such as structural fibres incorporated in a matrix of polymeric material, for example carbon fibre in thermo-setting resin) and in such a case the seat 3 can be formed directly in the material that constitutes the pedal crank 1 itself, or else it can be formed on an insert associated with the body of the pedal crank 1, for example a metal or composite material insert, incorporated in the body of the pedal crank 1.

The central axle 4 is hollow and substantially tubular and at its ends it comprises respective coupling zones 5 with the left pedal crank 1 and with the right pedal crank (the latter of which is not shown).

Each coupling zone 5 of the central axle 4 is provided with a central hole 6 with an internal threading 7 for screwing engagement with an attachment element of the pedal crank 1, such as an attachment screw 9.

The attachment screw 9 comprises a threaded shank 10, a flanged head 11 and a hexagonal recess 12 for engagement with a manoeuvring tool (not illustrated).

The seat 3 of the pedal crank 1 comprises a first coupling zone 14 with the coupling zone 5 of the central axle 4 and a second zone 15, adjacent to the first coupling zone 14 and with a greater diameter than it. Between the two zones 14 and 15 an annular abutment surface 16 is defined. An anti-loosening washer 13 is arranged between the head 11 of the screw 9 and the annular abutment surface 16 in the seat 3 of the pedal crank 1.

When the pedal crank 1 is assembled to the central axle 4, the internal threading 7 of the coupling zone 5 of the central axle 4 is in screwing engagement with the threaded shank 10 of the screw 9. The head 11 of the attachment screw 9 is arranged completely inside the second zone 15; such a zone can then possibly be closed through the application of a lid, not foreseen in the illustrated example.

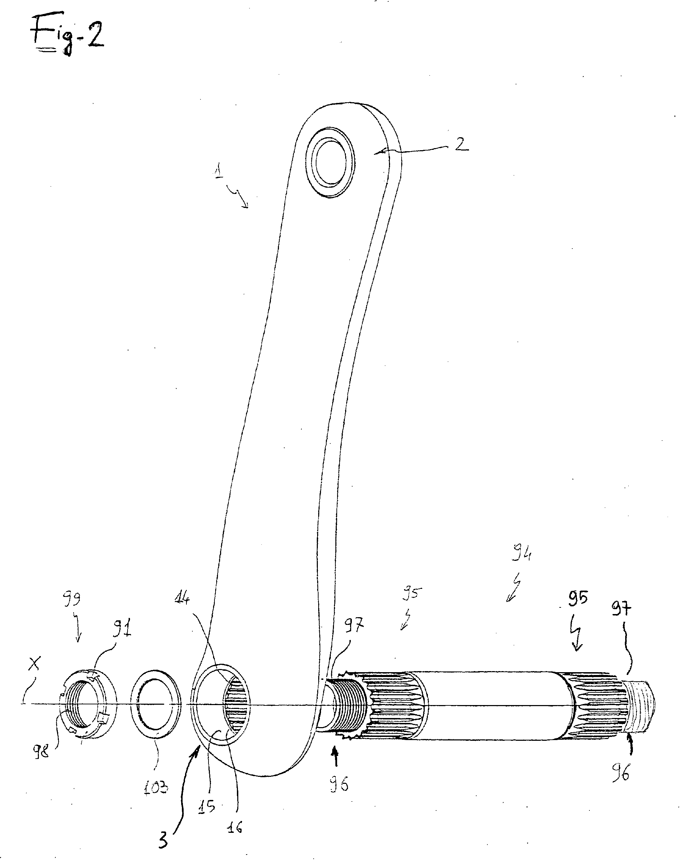

Figure 2 illustrates a pedal crank 1 (the same as that of figure 1, and therefore numbered in the same way) and a central axle 94. The axle 94, close to its ends, comprises both two respective coupling zones 95 with the left pedal crank 1 and with the right pedal crank (the latter of which is not shown), and two respective cylindrical shanks 96, projecting axially with respect to the zones 95 and provided with an external threading 97 for screwing engagement with an attachment element of the pedal crank, such as an attachment ring nut 99. The attachment ring nut 99 consists of an annular element provided with internal threading 98 that engages on the external threading 97 of the shank 96 of the central axle 94 and with four outer notches 91 for engagement with a manoeuvring tool (not illustrated). As for the embodiment of figure 1, an antifriction washer 103 is arranged between the ring nut 99 and the annular abutment surface 16 in the seat 3 of the pedal crank 1.

When the pedal crank 1 is assembled to the central axle 94, the external threading 97 of the cylindrical shank 96 of the central axle 94 is in screwing engagement with the internal threading 98 of the attachment ring nut 99. The ring nut 99 is arranged completely inside the second zone 15 of the seat 3; as for the embodiment of figure 1, such a zone can then possibly be closed through the application of a lid, not foreseen in the illustrated example.

In a variant of the invention not illustrated, for the locking of the pedal cranks the central axle can be provided on one side with an internal threading (such as the threading 7 of the axle 4 of figure 1) and on the other side with a threaded shank (such as the shank 96 of the axle 94 of figure 2).

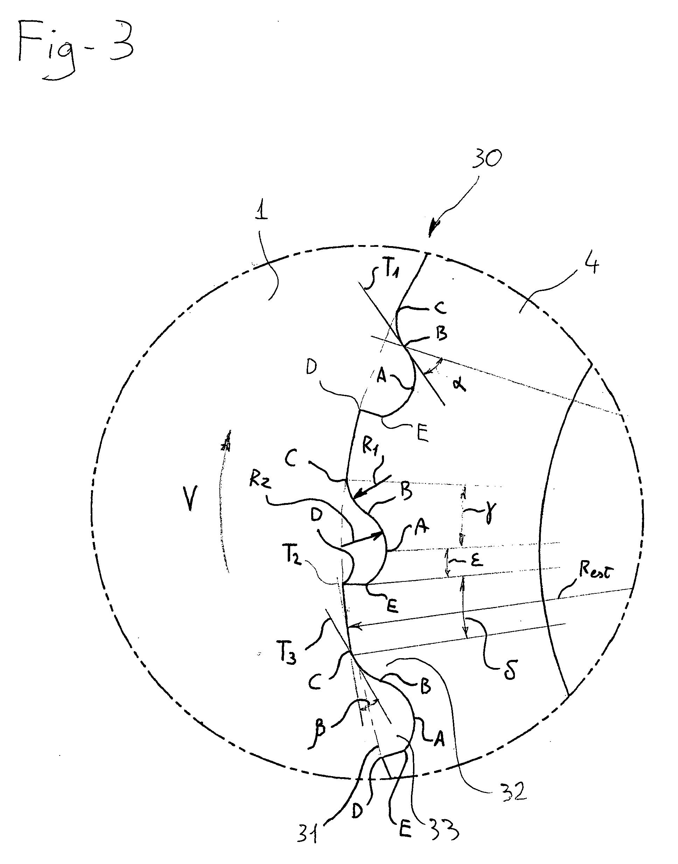

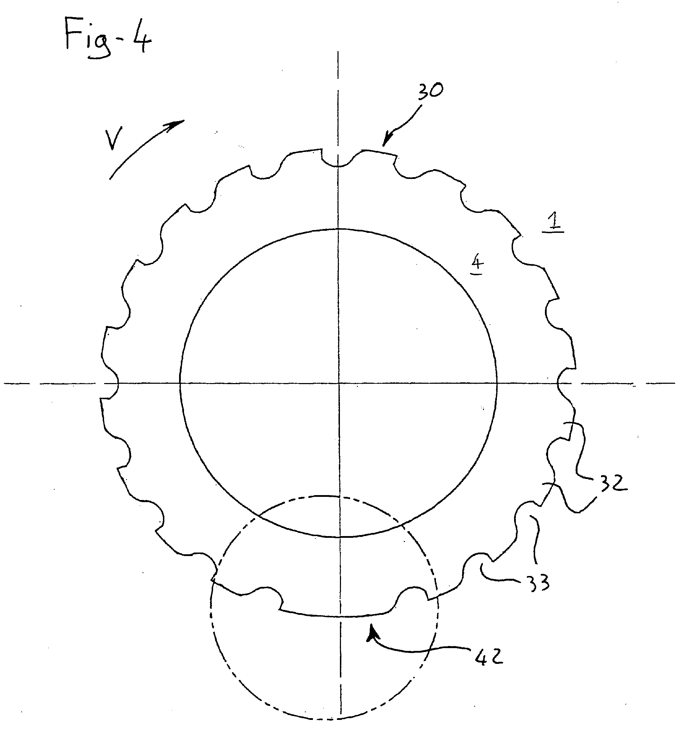

Figure 3 illustrates an enlarged view of a portion of a coupling profile 30 according to the invention, wholly illustrated - even if with less detail - in figure 4; it should be understood that the coupling profile 30 extends with regularity on all 360° about the axis X of the bottom bracket, possibly with a discontinuity 42 having a key assembly function; as shown in figure 4, such a discontinuity 42 is for example given by the lack of a groove 33, the two adjacent ribs 32 being joined together. For greater clarity, in figures 3 and 4 the direction of rotation of the pedal crank 1 during pedalling forwards is indicated with V; moreover, again for the sake of clarity, the zones around the coupling profile 30 are respectively numbered 1 and 4 to indicate the arrangement of pedal crank and axle; however, it is clear - as already explained - that the illustrated coupling profile 30 is an ideal outline, and that the actual outer profile of the axle 4 and inner profile of the seat 3 of the pedal crank 1 can possibly depart from such an ideal outline.

The coupling profile 30 comprises a periodically repeated succession (excluding the discontinuity 42) about the axis X of three close lines that are filleted each other, indicated hereafter and in the figures through the respective end points: a power transmission line AC, an outer arc CD ed an idle line DA.

The power transmission line AC comprises a first portion of line BC formed from an arc of circumference having radius R1, convex towards the axis X, and a second portion of line AB formed from an arc of circumference having radius R2, concave towards the axis X. The two portions AB and BC are filleted each other tangentially, i.e. in point B the tangent to the portion AB coincides with the tangent to the portion BC; such a tangent T1 is inclined with respect to the radial direction R by an angle á equal to about 30°. Preferably, the radii R1 and R2 are the same.

The outer arc CD comprises a portion of an outer circumference 31 of the coupling profile 30, and therefore has Rest radius. The outer arc CD is filleted to the power transmission line AC in point C according to an angle β (defined between the respective tangents T2 and T3 in which T2 is the tangent of the outer arc CD and T3 is the tangent of the portion BC of the power transmission line) of less than 45°, preferably less than 20°, and more preferably substantially equal to 0°; in the illustrated example β is set different to zero, in order to be able to highlight it better; indeed, in such an example the arcs AC and CD are filleted each other substantially tangentially.

The idle line DA comprises a first portion of line DE formed from a rectilinear portion, extending in the radial direction and thus filleted at 90° to the outer arc CD, and from a second portion of line EA formed from an arc of circumference having radius R1 (equal to the radius of the first portion of line AB), which is convex towards the axis X. The two portions DE and EA are filleted each other according to an angle of about 45°. The fitting with sharp edge at 90° in point D of the profile 30 does not prejudice its strength, because during pedalling forwards in that zone there is no transmission of stresses between pedal crank 1 and central axle 4.

The portion of line EA and the portion of line AB are not only filleted each other tangentially, but are more precisely extensions of each other, i.e. they are portions of the same arc of circumference having radius R1. Preferably, R1 is equal to the distance in the radial direction of the point A from the outer circumference 31.

Each power transmission line AC has an extension in the angular direction about the axis X equal to an angle γ, each outer arc CD has an extension in the angular direction about the axis X equal to an angle δ and each idle line DA has an extension in the angular direction about the axis X equal to an angle ε.

As an example, the illustrated profile 30 foresees twenty ribs 32 and the values of γ, δ and ε are respectively equal to about 7.5°, 6.5° and 4°.

The triad of lines AB, BD and DA as stated is repeated along the 360° about the axis X and therefore the coupling profile 30 defines a succession of filleted loops, which can be considered from the point of view of the axle 4 or from that of the pedal crank 1. By adopting the point of view of the axle 4 (which may be more instinctive looking at figure 3) the aforementioned loops thus comprise ribs 32 and grooves 33. The number of ribs 32 and therefore of grooves 33 can be chosen by the designer of the transmission; the greater the number, the lesser the extension in the angular or circumferential direction of the ribs 32 and grooves 33 shall be.

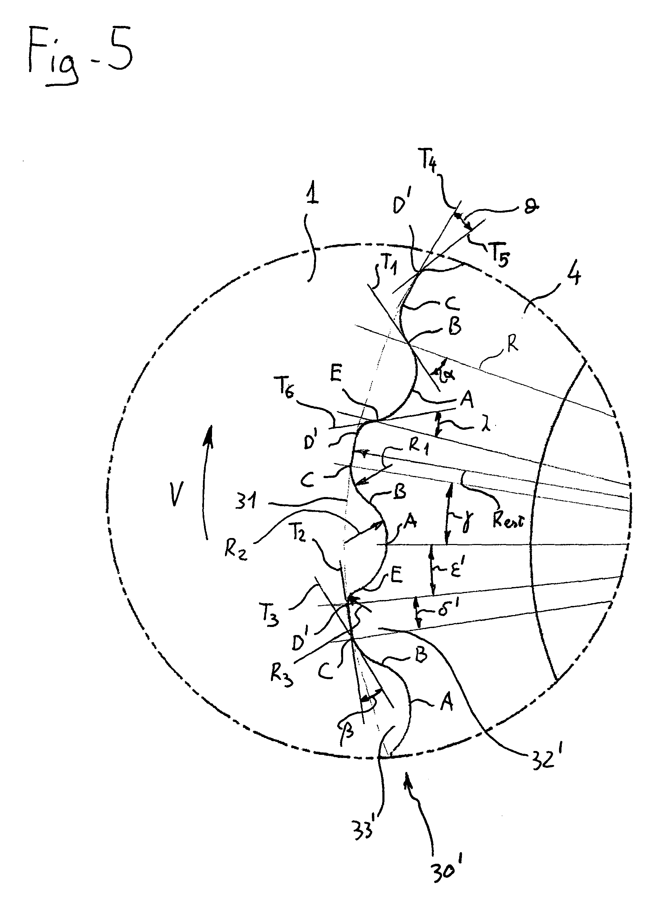

In figure 5, in the same way as figure 3, a portion of a coupling profile 30' according to a variant of the invention is illustrated on an enlarged scale. The profile 30' is partially equal to the profile 30; therefore, for the details and elements of the profile 30' that correspond to details or elements of the profile 30, the same reference numerals as the profile 30 are used, with the addition of an apostrophe in the cases in which the detail or element is different in the profile 30' with respect to the profile 30.

The fundamental difference between the profile 30' and the profile 30 is in point D', which separates the outer arc CD' from the first portion of the idle line D'E. At such a point D' the first portion D'E of the idle line and the outer arc CD' converge; at point D', the outer arc CD' has the tangent T4, whereas the first portion of the idle line D'E has the tangent T5, and between T4 and T5 a fitting angle ϑ substantially less than 90° is defined, preferably less than 30°.

The first portion D'E of the idle line is therefore not radial, but rather is formed from an arc of circumference that is concave towards the axis X and having radius R3, filleted tangentially to the portion EA in point E according to a straight line T6, inclined with respect to the radial direction by an angle λ of less than 45°, preferably equal to about 30°. Preferably, the radius R3 is different from the radii R1 and R2, more preferably less than them.

The consequence of the above is that the angles δ' and ε' that express the angular size of the outer arc CD' and of the idle line D'A change with respect to the profile 30: δ' is smaller than δ, whereas ε' is greater than ε. On the other hand, the angle γ that expresses the angular size of the power transmission line AC remains unchanged.

As an example, the illustrated profile 30' foresees twenty ribs 32' and the values of γ, δ' ed ε' are respectively equal to about 7.5°, 6° and 4.5°. It should be noted that in figure 5 both the radii R1, R2 and R3 and the angles γ, δ' and ε' are represented purely qualitatively and not quantitatively for reasons of clarity of drawing; in particular, the radius R3 has purposefully been exaggerated to allow it to be seen, with the consequence that the angle δ' appears in the figures to be greater than ε', whereas the opposite is true.

The profile 30', with respect to the profile 30, behaves in a mechanically analogous way, since it has the same power transmission line AC. Nevertheless, it may be preferred for simplicity of construction, since the 90° edge may be difficult to make. Moreover, the axle 4 made according to the profile 30' lacks sharp edges, and therefore is not dangerous to handle during assembly and/or maintenance of the pedal cranks.

A coupling profile according to the invention, thanks to the absence of sharp edge zones on the power transmission line, allows a homogeneous distribution of stresses both in the pedal crank and in the central axle; moreover, the asymmetric shape of the profile, with the power transmission line different to the idle line, allows the mechanical characteristics of the material to be better exploited according to the essentially asymmetrical stresses transmitted during pedalling forwards.

Consequently, this coupling profile allows the weight of the transmission to be reduced without reducing its strength increasing the risks of breaking, i.e. it allows strength to be increased without increasing weight.

## Claims

1. Coupling profile (30; 30') between a central axle (4; 94) of a bottom bracket of a bicycle transmission and a pedal crank (1), comprising, in a plane transversal to the axis (X) of the bottom bracket, outer arcs (CD; CD') belonging to the same outer circumference (31) of the coupling, each of such outer arcs (CD; CD') being flanked and filleted on one side to a power transmission line (AC) and on the opposite side to an idle line (DA; D'A), **characterised in that** the power transmission line (AC) and the idle line (DA; D'A) are asymmetrical to each other with respect to the outer arc (CD; CD') that separates them.

2. Profile (30; 30') according to claim 1, wherein the power transmission line (AC) comprises portions of lines (AB, BC) all filleted each other tangentially.

3. Profile (30; 30') according to claim 1, wherein the power transmission line (AC) is filleted to the outer arc (CD; CD') according to an angle (β) of less than 45°.

4. Profile (30; 30') according to claim 1, wherein the power transmission line (AC) is filleted to the outer arc (CD; CD') according to an angle (β) of less than 20°.

5. Profile (30; 30') according to claim 1, wherein the power transmission line (AC) is filleted tangentially to the outer arc (CD; CD').

6. Profile (30; 30') according to claim 1, wherein the power transmission line (AC) comprises a first arc of circumference (BC) adjacent to the outer arc (CD; CD'), which is concave towards the axis (X) of the bottom bracket, and a second arc of circumference (AB) adjacent to the first arc of circumference (BC), which is convex towards the axis (X) of the bottom bracket.

7. Profile (30; 30') according to claim 7, wherein the first arc of circumference (BC) and the second arc of circumference (AB) are filleted tangentially according to a straight line (T1) that forms an angle (α) less than 45° with the radial direction.

8. Profile (30; 30') according to claim 7, wherein the first concave arc (BC) and the second convex arc (AB) of the power transmission line (AC) have the same radius (R1, R2).

9. Profile (30) according to claim 1, wherein the idle line (DA) comprises a radial rectilinear portion (DE), filleted at 90° to the outer arc (CD), and an arc of circumference (EA) that is convex towards the axis (X) of the bottom bracket.

10. Profile (30) according to claim 10, wherein the rectilinear portion (DE) and the arc of circumference (EA) are filleted according to an angle of about 45°.

11. Profile (30') according to claim 1, wherein the idle line (D'A) comprises an arc of circumference (D'E) that is concave towards the axis (X) of the bottom bracket and an arc of circumference (EA) that is convex towards the axis (X) of the bottom bracket.

12. Profile (30') according to claim 12, wherein the concave arc of circumference (D'E) and the convex arc of circumference (EA) are filleted tangentially.

13. Profile (30') according to claim 12, wherein the first portion (D'E) of the idle line (D'A) is filleted to the outer arc (CD') according to an angle (ϑ) of less than 30°.

14. Profile (30) according to claims 7 and 10, wherein the convex arc of the idle line (EA) and the second convex arc (AB) of the adjacent power transmission line (AC) are extensions of each other.

15. Profile (30') according to claims 7 and 12, wherein the convex arc of the idle line (EA) and the second convex arc (AB) of the adjacent power transmission line (AC) are extensions of each other.

16. Profile (30) according to claim 1, comprising twenty triads each comprising a power transmission line (AC), an outer arc (CD) and an idle line (DA), wherein the outer arc (CD) has an angular extension (δ) about the axis (X) of the bottom bracket equal to about 6.5°, the idle line (DA) has an angular extension (ε) of about 4° and the power transmission line (AC) has an angular extension (γ) of about 7.5°.

17. Profile (30') according to claim 1, comprising twenty triads each comprising a power transmission line (AC), an outer arc (CD') and an idle line (D'A), wherein the outer arc (CD') has an angular extension (δ') about the axis (X) of the bottom bracket equal to about 6°, the idle line (D'A) has an angular extension (ε') of about 4.5° and the power transmission line (AC) has an angular extension (γ) of about 7.5°.

18. Central axle (4; 94) of a bottom bracket of a bicycle transmission, comprising two coupling zones (5; 95) for pedal cranks (1), **characterised in that** such zones (5; 95) are shaped according to a coupling profile (30; 31) in accordance with any one of claims 1 to 18.

19. Axle (4) according to claim 19, wherein the axle (4) is hollow and comprises an internal threading (6) at at least one of its ends, for screwing engagement with an attachment element (9) of the pedal crank (1).

20. Axle (94) according to claim 19, comprising, at at least one of its two ends and adjacent to the respective coupling zone (95) for the pedal crank (1), a shank (96) provided with an external threading (97) for screwing engagement with an attachment element (99) of the pedal crank (1).

21. Axle (4; 94) according to any one of claims 19 to 21, **characterised in that** it is made from steel.

22. Pedal crank (1) of a bicycle transmission, comprising a coupling seat (3) for a central axle (4; 94) of a bottom bracket, **characterised in that** such a seat (3) is shaped according to a coupling profile (30; 30') in accordance with any one of claims 1 to 18.

23. Pedal crank (1) according to claim 23, wherein at least the zone in which the receiving seat is formed (3) is made from aluminium alloy.
